# EUROPÄISCHE PATENTSCHRIFT

(11) **EP 0 921 046 B1**
(45) Veröffentlichungstag und Bekanntmachung des Hinweises auf die Patenterteilung: **28.04.2004**
(21) Anmeldenummer: 98122359.7
(22) Anmeldetag: 25.11.1998
(51) Int. Cl.: B60R 25/00

(54) **Einrichtung zur Diebstahlsicherung für Kraftfahrzeuge**
Antitheft device for motor vehicles
Dispositif anti-vol pour véhicules à moteur

(30) Priorität: 03.12.1997 DE 19753559
(43) Veröffentlichungstag der Anmeldung: 09.06.1999
(73) Patentinhaber: ADAM OPEL AG, 65423 Rüsselsheim (DE)
(72) Erfinder: Pfeffer, Thomas Dipl.-Ing., D-64409 Messel (DE); Görg, Gerald Dipl.-Ing., 65232 Taunusstein (DE)
(74) Vertreter: Kümpfel, Heinz, Dipl.-Ing.

(56) Entgegenhaltungen:
- EP-A- 0 753 437
- DE-A- 4 432 000
- GB-A- 2 250 493
- US-A- 4 167 222

## Beschreibung

Die Erfindung bezieht sich auf eine Einrichtung zur Diebstahlsicherung für Kraftfahrzeuge mit den im Oberbegriff des Patentanspruchs 1 angegebenen Merkmalen.

Es ist bekannt, daß verschiedene Schaltfunktionen durch Betätigung eines Zündschlosses ausführbar sind, wozu ein zugehöriger Zündschlüssel vonnöten ist. Eine ausreichende Absicherung gegen Diebstahl ist dadurch jedoch nicht gegeben, da ein Zündschloß elektrisch zu überbrücken (kurzzuschließen) ist.

Wie beispielsweise in der DE-OS 44 32 000 beschrieben, die die Merkmale des Oberbegriffs von Anspruch 1 zeigt, werden kodierte Daten von einem Sender im Bereich des Zündschlüssels zu einem Empfangsgerät mit Antenne im Bereich des Zündschlosses übermittelt. So werden betriebswesentliche Kraftfahrzeugfunktionen freigeschaltet, wenn ein richtiger Code (Daten) übermittelt wird. Antenne und Empfangsgerät sind üblicherweise an einem Gehäuse des Zündschlosses befestigt. In der DE-OS 44 32 000 ist beschrieben, daß die Antenne und das Empfangsgerät von einem Gehäuse umgeben sind. Ein Steckkontakt des Empfangsgerätes ist dort frei zugänglich und das Gehäuse kann zu Wartungszwecken geöffnet oder ausgetauscht werden.

Im DE 92 01 084 U1 ist vorgesehen, einen zusätzlichen Schalter im Zündschloß vorzusehen, der erst dann eine Code-Übermittlung zuläßt, wenn er mittels des Zündschlüssels geschlossen wurde. Vergleichbar damit sind auch Lösungen nach DE-OS 195 34 226 und DE-PS 195 39 344.

Diebe bedienen sich heute der Möglichkeit des Austausches der Einrichtung zur Diebstahlsicherung eines zu stehlenden Kraftfahrzeugs, wobei sie ein vorkonditioniertes Komplettsystem mitbringen und dieses anstelle des vorhandenen Systems mit dem Kraftfahrzeug kontaktieren. Dabei ist die Demontage des vorhandenen Systems nicht erforderlich und die gesamte Manipulation kann sehr schnell vonstatten gehen. Der Dieb ist im Normalfall nicht im Besitz des zum Kraftfahrzeug passenden Zündschlüssels, was bei dem angesprochenen Komplettaustausch auch nicht erforderlich ist.

Die aus dem Stand der Technik bekannten Vorrichtungen erlauben es, den Komplettaustausch schnell auszuführen, da die Empfangsgeräte im Zündschloßbereich relativ leicht zugänglich bzw. elektrische Kontakte einfach erreichbar sind.

Es ist Aufgabe der Erfindung, unter Beachtung der Wartungsfreundlichkeit den von Dieben benötigten Zeitaufwand für den Komplettanschluß fahrzeugfremder Einrichtungen zur Diebstahlsicherung zu erhöhen und damit das Kraftfahrzeug im Hinblick auf Diebstahl unattraktiv zu machen.

Aus Studien wurde deutlich, daß potentielle Diebe oft nur dann an einem Diebstahl eines Kraftfahrzeugs interessiert sind, wenn ein maximaler Zeitaufwand von fünf bis zehn Minuten zum "Erfolg" führen kann. Für einen Komplettaustausch einer bekannten Diebstahlsicherungseinrichtung gegen ein mitgebrachtes vorkonditioniertes System ist bereits ein gewisser Zeitaufwand vonnoten. Die erfindungsgemäße Einrichtung zeichnet sich nunmehr durch die im Patentanspruch 1 angegebenen Merkmale aus, womit ein Komplettaustausch nur bei Benutzung des passenden mechanischen Zündschlüssels möglich ist, da weder das Empfangsgerät noch die zugehörigen elektrischen Kontakte sonst zugänglich sind. Die mechanische Betätigung des Zündschlosses erfordert selbst bei geübten Dieben eine Zeit von mehreren Minuten. Diese Zeit muß ein Dieb nun zusätzlich aufbringen, wobei davon ausgegangen wird, daß dies den Dieb im Normalfall vom Diebstahlversuch abhält.

Vorteilhafte Details der Erfindung ergeben sich aus den Patentansprüchen 2 bis 5. Es ist eine Abdeckung für das Empfangsgerät und zugehörige elektrische Kontakte (Stekker) vorgesehen, die stabil und bruchsicher ausgeführt und nur entfernbar ist, wenn eine von Elementen des Zündschlosses blockierte Verriegelung entfernt wird. Die Freigabe der Abdeckung kann erfolgen, wenn das Zündschloß nach Zündschlüsselbetätigung aus dem Zündschloßgehäuse entfernt wird, oder die blockierenden Elemente des Zündschlosses sind mittels des Zündschlüssels beweglich (vergleichsweise wie Lenkradsperre). Bei Maßnahmen der Systemwartung, bei denen der Zündschlüssel vorliegt, ergeben sich kaum zusätzliche Schwierigkeiten, da die Abdekkung dann leicht entfernbar ist. Ohne Zündschlüssel haben Diebe jedoch das Problem der Abdeckung zu überwinden, da ein Komplettaustausch nicht möglich ist ohne Zugänglichkeit an Anschlußstellen.

Details der Erfindung werden im folgenden anhand eines Ausführungsbeispiels beschrieben. Die einzige zugehörige Figur zeigt ein Zündschloßgehäuse mit Zündschloß und Zündschlüssel sowie mit dem Empfangsgerät in perspektivischer Darstellungsweise.

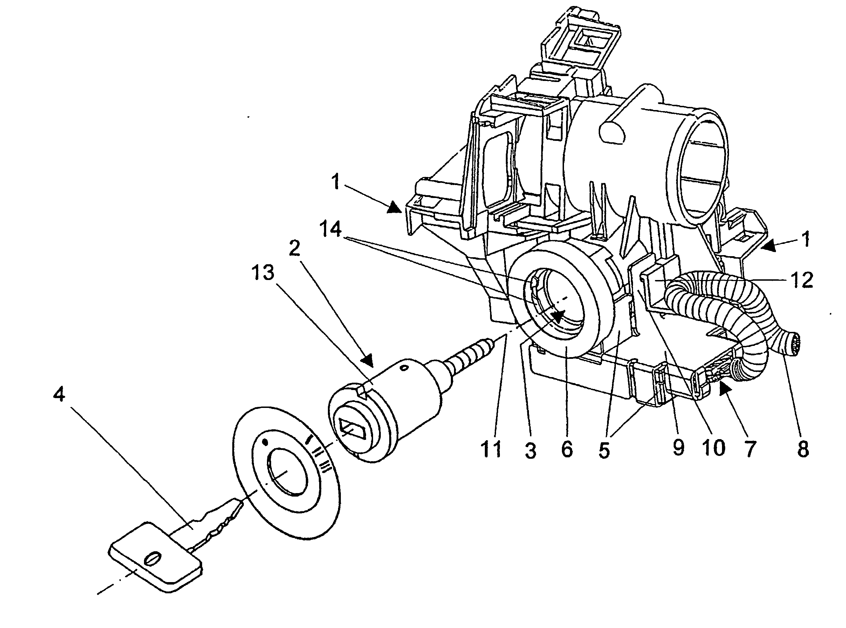

Ein Zündschloßgehäuse 1 wird prinzipiell wie bekannt zur Anbringung im Bereich einer Lenksäule eines Kraftfahrzeugs gestaltet. Ein zylinderförmiges Zündschloß 2 ist in eine Öffnung 3 des Zündschloßgehäuses 1 einsetzbar und mittels eines Zündschlüssels 4 zu betätigen. Der Zündschlüssel 4 ist, wie bekannt, mit einem Daten-Sender ausgestattet, wobei diesbezügliche Details in der Figur nicht gezeigt sind.

Ein Daten-Empfangsgerät 5 ist im Beispiel in Baueinheit mit einer Antenne 6 ausgeführt. Die Antenne 6 ist ringförmig ausgebildet und umgibt die Öffnung 3 des Zündschloßgehäuses 1. Dem Daten-Empfangsgerät 5 werden von der Antenne 6 aufgenommene Daten zugeleitet und es finden dort Verarbeitungsschritte zur Fahrzeug-Benutzeridentifikation statt. Ein Steckverbinder 7 ist mit dem Empfangsgerät 5 kontaktiert und Signale werden über elektrische Leitungen 8 an Steuereinrichtungen des Fahrzeugs weitergeleitet.

Die Antenne 6 mit Daten-Empfangsgerät 5 wird normalerweise am Zündschloßgehäuse 1 befestigt, wobei ein Gehäuse des Empfangsgerätes 5 und die Steckverbindung 7 zugänglich sind und eine Demontage möglich ist. Gemäß der vorliegenden Erfindung ist eine stabile.aus Metall bestehende Abdeckung 9 vorgesehen, die das Empfangsgerät 5 sowie den Steckverbinder 7 abdeckt und damit unzugänglich macht und vor Demontage schützt. Die Abdeckung 9 wird bei noch nicht montiertem Empfangsgerät 5 auf dieses (in der dargestellten Lage von rechts) aufgeschoben. Eine Lasche 10 der Abdeckung 9 steht dann etwa senkrecht nach oben vom Empfangsgerät 5 ab. Anschließend wird das Empfangsgerät 5 mit Stecker 7, Antenne 6 und Abdeckung 9 am Zündschloßgehäuse 1 montiert. Bei Heranführung dieser Einheit aus Richtung der Linie 11 an das Zündschloßgehäuse 1 hintergreift die Lasche 10 eine Gehäusewand 12 des Zündschloßgehäuses 1. So ist gewährleistet, daß die genannte Baueinheit auch nur in Richtung der Linie 11 wieder vom Zündschloßgehäuse 1 demontierbar ist. Das Empfangsgerät 5 mit Antenne 6 wird des weiteren in bekannter Weise am Zündschloßgehäuse 1 gehaltert (verschraubt, verklipst, ...). Nunmehr erfolgt der Einbau des Zündschlosses 2 in die Öffnung 3 des Zündschloßgehäuses 1. Dabei wird die Antenne 6 und damit auch die Abdeckung 9 am Zündschloßgehäuse 1 verriegelt. Die Seitenwandung 13 des Zündschlosses 2 setzt sich vor (beidseitig vorhandene, aber nur einseitig in der Darstellung sichtbare) Verrastungen 14 der Antenne 6, womit diese nicht mehr vom Gehäuse 1 losbar ist. Nur nach Entfernen des Zündschlosses 2, wozu der Zündschlüssel 4 vonnöten ist, kann die Antenne 6 mit Empfangsgerät 5, Stecker 7 und Abdeckung 9 vom Gehäuse 1 gelöst werden. Die gesamte Einheit wird also mittels der Antenne 6 am Gehäuse 1 verriegelt, wobei die Abdeckung 9 zusätzlich durch die Lasche 10 am Gehäuse 1 gesichert ist. So ist die Abdeckung 9 bei eingesetztem Zündschloß 2 nicht entfernbar und ein potentieller Dieb kann weder das Empfangsgerät 5 noch den Steckverbinder 7 entfernen. Er muß das Zündschloß 2 betätigen, um es entfernen zu können, was zeitaufwendig ist. Zu Wartungszwecken ist hingegen eine sehr schnelle Demontage möglich, da dann in der Regel der Zündschlüssel 4 vorhanden ist.

In anderer Ausführung der Erfindung könnte die Abdeckung 9 von speziellen Elementen des Zündschlosses 2, die mittels des Zündschlüssels 4 zwischen einer Freigabestellung und einer Sperrstellung verlagerbar sind, verriegelt werden.

## Patentansprüche

1. Einrichtung zur Diebstahlsicherung für Kraftfahrzeuge, bestehend aus einem Zündschlüssel (4) und einem damit zu betätigenden Zündschloß (2) in einem Zündschloßgehäuse (1) sowie aus einem Daten-Sender in oder am Zündschlüssel (4) und aus einem Daten-Empfangsgerät (5) mit Antenne (6) im Bereich des Zündschloßgehäuses (1), wobei vom Sender zum Empfangsgerät (5) übermittelte Daten zur Freischaltung betriebswesentlicher Kraftfahrzeugfunktionen dienen, **dadurch gekennzeichnet, daß** das Daten-Empfangsgerät (5) sowie elektrische Kontakte (7) dieses Empfangsgerätes (5) mechanisch gegen Demontage und Manipulationen geschützt sind und dieser mechanische Schutz nur durch Zündschloßbetätigung mittels des Zündschlüssels (4) aufhebbar ist.

2. Einrichtung nach Patentanspruch 1, **gekennzeichnet durch** eine Verriegelung für eine entfernbare Abdekkung (9) des Empfangsgerätes (5) und der elektrischen Kontakte (7), die sich im Bereich des Zündschloßgehäuses (1) befindet, wobei die Verriegelung von Elementen des Zündschlosses (2) an dem Gehäuse (1) des Zündschlosses (2) blockiert ist.

3. Einrichtung nach Patentanspruch 2, **dadurch gekennzeichnet, daß** die Verriegelung von der Antenne (6) gebildet wird.

4. Einrichtung nach Patentanspruch 3, **dadurch gekennzeichnet, daß** die Antenne (6) und damit auch die Abdeckung (9) nur demontierbar sind, nachdem das Zündschloß (5) aus dem Zündschloßgehäuse (1) entfernt wurde, was mit Hilfe des Zündschlüssels (4) möglich ist.

5. Einrichtung nach Patentanspruch 2, **dadurch gekennzeichnet, daß** die die Verriegelung blockierenden Elemente des Zündschlosses (2) mittels des Zündschlüssels (4) aus einer Sperrstellung in eine Freigabestellung beweglich sind.

## Claims

1. Device for protection against theft for motor vehicles, consisting of an ignition key (4) and an ignition lock (2) to be operated therewith in an ignition lock housing (1), and a data transmitter in or on the ignition key (4) and a data reception device (5) with aerial (6) in the region of the ignition lock housing (1), wherein data transmitted from the transmitter to the reception device (5) serve to clear motor vehicle functions essential to operation, **characterised in that** the data reception device (5) and electrical contacts (7) of this reception device (5) are mechanically protected against dismounting and manipulations, and this mechanical protection can be eliminated only by ignition lock operation with the ignition key (4).

2. Device according to patent claim 1, **characterised by** a locking system for a removable cover (9) of the reception device (5) and of the electrical contacts (7), which is located in the region of the ignition lock housing (1), wherein the locking system is locked by elements of the ignition lock (2) on the housing (1) of the ignition lock (2).

3. Device according to patent claim 2, **characterised in that** the locking system is formed by the aerial (6).

4. Device according to patent claim 3, **characterised in that** the aerial (6) and hence also the cover (9) can be dismounted only after the ignition lock (5) has been removed from the ignition lock housing (1), which is possible by means of the ignition key (4).

5. Device according to patent claim 2, **characterised in that** the elements of the ignition lock (2) which lock the locking system are movable by means of the ignition key (4) out of a blocking position into a release position.

## Revendications

1. Dispositif antivol pour véhicules à moteur, se composant d'une clé de contact (4) et d'une serrure de contact (2) à actionner avec celle-ci dans un boîtier de serrure de contact (1), ainsi que d'un émetteur de données dans, ou sur, la clé de contact (4) et d'un appareil récepteur de données (5) avec une antenne (6) dans la zone du boîtier de serrure de contact (1), les données transmises de l'émetteur à l'appareil récepteur (5) servant à déconnecter des fonctions essentielles au fonctionnement du véhicule à moteur, **caractérisé en ce que** l'appareil récepteur de données (5) ainsi que des contacts électriques (7) de cet appareil récepteur (5) sont protégés mécaniquement contre un démontage et des manipulations, et **en ce que** cette protection mécanique ne peut être annulée que par l'actionnement de la serrure de contact au moyen de la clé de contact (4).

2. Dispositif d'après la revendication 1, **caractérisé par** un verrouillage pour un revêtement amovible (9) de l'appareil récepteur (5) et des contacts électriques (7), qui se trouve dans la zone du boîtier de serrure de contact (1), le verrouillage étant bloqué par des éléments de la serrure de contact (2) sur le boîtier (1) de la serrure de contact (2).

3. Dispositif d'après la revendication 2, **caractérisé en ce que** le verrouillage est produit par l'antenne (6).

4. Dispositif d'après la revendication 3, **caractérisé en ce que** l'antenne (6), et donc également le revêtement (9), ne sont démontables qu'après que la serrure de contact (2) a été retirée du boîtier de serrure de contact (1), ce qui est possible à l'aide de la clé de contact (4).

5. Dispositif d'après la revendication 2, **caractérisé en ce que** les éléments de la serrure de contact (2) bloquant le verrouillage sont manoeuvrables au moyen de la clé de contact (4), d'une position fermée vers une position de libération.
